# EUROPÄISCHE PATENTSCHRIFT

(11) **EP 1 358 735 B1**
(45) Veröffentlichungstag und Bekanntmachung des Hinweises auf die Patenterteilung: **08.02.2006**
(21) Anmeldenummer: 01999079.5
(22) Anmeldetag: 27.11.2001
(51) Int. Cl.: H04L 12/00

(54) **EINHEIT ZUR VERTEILUNG UND VERARBEITUNG VON DATENPAKETEN**
UNIT FOR DISTRIBUTING AND PROCESSING DATA PACKETS
UNITE POUR DISTRIBUER ET TRAITER DES PAQUETS DE DONN ES

(30) Priorität: 28.11.2000 DE 10059026
(43) Veröffentlichungstag der Anmeldung: 05.11.2003
(73) Patentinhaber: Infineon Technologies AG, 81669 München (DE)
(72) Erfinder: NIE, Xiaoning, 81543 München (DE)
(74) Vertreter: Lange, Thomas
(86) Internationale Anmeldenummer: PCT/DE2001/004499
(87) Internationale Veröffentlichungsnummer: WO 2002/045342

(56) Entgegenhaltungen:
- WO-A-00/30321
- ALTEON WEBSYSTEMS: "VIRTUAL MATRIX ARCHITECTURE: SCALING WEB SERVICES FOR PERFORMANCE AND CAPACITY" WHITE PAPER, April 2000 (2000-04), XP002191242 Gefunden im Internet: <URL:http://www.nortelnetworks.com/product s/library/collateral/intel_int/v ma_white_pa> [gefunden am 2002-02-22]

## Beschreibung

Die Erfindung betrifft eine aus parallel geschalteten Prozessoren aufgebaute Einheit zur Verteilung und Verarbeitung von Datenpaketen.

Bei der Übertragung von Datenpaketen durch Glasfasern werden derzeit Datenraten von mehr als 1 Gb/s erreicht. In Datennetzen lassen sich indes derart hohe Übertragungsraten aufgrund unterschiedlicher Limitierungen, die beispielweise von Datenpaketvermittlern (Router) oder -verteilern (Switch) erzeugt werden, noch nicht erzielen. Herkömmliche Datenpaketvermittler beruhen in erster Linie auf Software-Lösungen. Seit einiger Zeit werden auch Hardware-Lösungen eingesetzt, welche häufig Halbleiterbausteine verwenden, die für bestimmte Anwendungen konzipiert wurden. Diese sogenannten ASICs erlauben höhere Datenübertragungsgeschwindigkeiten als reine Software-Lösungen, bieten jedoch weit geringere Flexibilität. Des weiteren reichen die Verarbeitungsgeschwindigkeiten der zur eigentlichen Datenverarbeitung eingesetzten Prozessoren bei weitem nicht an die Datenraten heran, die in Datenleitungen auftreten können. Daher ist man dazu übergegangen, mehrere Prozessoren in Parallelarchitekturen einzubeziehen, bei welchen die eingehenden Datenpakete durch Datenpaketvermittler zur Verarbeitung auf die einzelnen Prozessoren verteilt werden. Durch die parallele Verarbeitung der Datenpakete können flexible Lösungen auf Prozessorbasis auch bei erhöhten Datenübertragungsgeschwindigkeiten realisiert werden.

In der internationalen Offenlegungsschrift WO 00/30321 A2 ist eine Einheit zur Verteilung und Verarbeitung von Datenpaketen beschrieben, welche parallel geschaltete Prozessoren zur Verarbeitung von Daten aufweist. Jeder Prozessor hat eine Verbindung zu einem gemeinsam genutzten Datenbus. Ferner gibt es eine Verwaltungseinheit, welche in Abhängigkeit von in den Datenpaketen abgelegten Verwaltungsinformationen die Datenpakete auf die Prozessoren verteilt.

Aufgabe der Erfindung ist es, eine auf parallel geschalteten Prozessoren basierende Einheit zur Verteilung und Verarbeitung von Datenpaketen zu schaffen, die eine hohe Datenübertragungsgeschwindigkeit aufweist. Insbesondere soll die zu schaffende Einheit zur Verteilung und Verarbeitung von Datenpaketen für solche Router eingesetzt werden können, bei denen eine vereinbarte Qualität der Verbindung (QoS) garantiert werden soll.

Die der Erfindung zugrundeliegende Aufgabenstellung wird durch die Merkmale der Ansprüche 1 und 15 gelöst. Vorteilhafte Weiterbildungen und Ausgestaltungen sind in den Unteransprüchen angegeben.

Ein wesentlicher Gedanke der Erfindung besteht darin, daß eine Einheit zur Verteilung und Verarbeitung von Datenpaketen parallel geschaltete Prozessoreinheiten mit jeweils einem Prozessor aufweist, wobei jeder Prozessor neben einer Verbindung zu einem gemeinsam genutzten Datenbus zusätzliche Zwischenverbindungen zu den Prozessoren benachbarter Prozessoreinheiten besitzt. Die zusätzlichen Zwischenverbindungen sind für den Austausch von Daten vorgesehen. Des weiteren umfaßt die erfindungsgemäße Einheit mindestens eine Verwaltungseinheit, deren Aufgabe es ist, die Datenpakete auf die Prozessoreinheiten zu verteilen. Dieses geschieht in Abhängigkeit von in den Datenpaketen abgelegten Verwaltungsinformationen und/oder in Abhängigkeit von durch die Prozessoreinheiten übermittelten Betriebsinformationen der Prozessoreinheiten.

Ein Vorteil der erfindungsgemäßen Einheit ist, daß beispielsweise bei Überlastung einer Prozessoreinheit Daten an eine benachbarte Prozessoreinheit weitergeleitet werden können. Diese Maßnahme ermöglicht eine höhere Datenübertragungsgeschwindigkeit im Vergleich zum Fehlen dieser Maßnahme. Vorteilhaft ist es außerdem, daß die Entscheidung über die Verteilung der Datenpakete nicht nur anhand der Betriebsinformationen der Prozessoreinheiten getroffen wird, sondern daß dabei auch die Verwaltungsinformationen der Datenpakete berücksichtigt werden. Die Verwaltungsinformationen sind in der Regel in den Köpfen der Datenpakete abgelegt. Durch die Berücksichtigung der Verwaltungsinformationen kann eine vereinbarte QoS eingehalten werden.

Eine bevorzugte Ausgestaltung der Erfindung sieht vor, daß jeder Prozessoreinheit ein Eingangsspeicher vorgeschaltet ist. Die den Prozessoreinheiten von der mindestens einen Verwaltungseinheit zugewiesenen Datenpakete können dort zwischengelagert werden, bevor sie von den Prozessoren verarbeitet werden.

Die Betriebsinformationen einer Prozessoreinheit können nicht nur Informationen über die Auslastung des zugehörigen Prozessors und über die Daten, die sich in der Prozessoreinheit befinden, enthalten, sondern auch über den Füllstand des vorgeschalteten Eingangsspeichers. Dieses sind wesentliche Informationen, welche die mindestens eine Verwaltungseinheit benötigt, um die Datenpakete bestmöglich auf die Prozessoreinheiten zu verteilen.

Eine besonders bevorzugte Ausgestaltung der Erfindung ist dadurch gekennzeichnet, daß die mindestens eine Verwaltungseinheit eine Vorprozessoreinheit zum Lesen der in den Datenpaketen abgelegten Verwaltungsinformationen, eine Zuordnungseinheit zum Verteilen der Datenpakete auf die Prozessoreinheiten und eine Synchronisationseinheit zur Steuerung der Ausgabezeitpunkte der Daten aus den Prozessoreinheiten aufweist. Die Synchronisationseinheit erhält von der Zuordnungseinheit die zur Steuerung der Ausgabezeitpunkte notwendigen Verwaltungs-und Betriebsinformationen. Durch die Synchronisationseinheit kann gewährleistet werden, daß die Datenpakete in einer gewünschten Reihenfolge aus den Prozessoreinheiten ausgegeben werden. Beispielsweise ist dieses die Reihenfolge, in der die Datenpakete auf die erfindungsgemäße Einheit treffen. Insbesondere bei einem aus zusammengehörigen Datenpaketen bestehenden Datenstrom wird demnach die Reihenfolge der Datenpakete durch die erfindungsgemäße Einheit nicht verändert. Dieses kann ein Kriterium einer vereinbarten QoS sein. Um eine solche QoS zu erfüllen, kann vorzugsweise die mindestens eine Verwaltungseinheit derart ausgelegt sein, daß zusammengehörige Datenpakete nur einer bestimmten Prozessoreinheit zugeteilt oder auf einige wenige bestimmte Prozessoreinheiten verteilt werden. Dadurch wird die sukzessive Verarbeitung und Ausgabe aufeinanderfolgender Datenpakete garantiert.

Eine weitere, im Sinne der vereinbarten QoS besonders vorteilhafte Ausgestaltung der Erfindung sieht vor, daß die Synchronisationseinheit Befehle in Form von Synchronisations-Datenzellen an die Eingangsspeicher der Prozessoreinheiten sendet, um die Ausgabezeitpunkte der Daten zu steuern. Dabei werden die Synchronisations-Datenzellen von den Eingangsspeichern und den Prozessoreinheiten bevorzugt vor anderen Daten verarbeitet.

Vorzugsweise weist jede Prozessoreinheit einen lokalen Datenspeicher auf. Der lokale Datenspeicher kann zur Speicherung von Teilen eines Datenpakets während der Verarbeitung des restlichen Datenpakets dienen. Zusätzlich ist es vorteilhaft, wenn die Prozessoren Zugang zu mindestens einem Programmspeicher haben. In diesem werden die für die Verarbeitung der Daten notwendigen Programme abgelegt. Des weiteren ist es von Vorteil, wenn die erfindungsgemäße Einheit einen von allen Prozessoren gemeinsam genutzten Speicherbereich aufweist. In dem gemeinsamen Speicherbereich können beispielsweise Klassifikationstabellen und systembezogene Datenpakete zwischengespeichert werden. Zugang zu dem gemeinsamen Speicherbereich haben die Prozessoren über den gemeinsam genutzten Datenbus.

Gemäß einer weiteren vorteilhaften Ausgestaltung der Erfindung übermitteln die Prozessoreinheiten ihre Betriebsinformationen an die jeweils benachbarten Prozessoreinheiten über die zusätzlichen Zwischenverbindungen. Sollen Nutzdaten zwischen benachbarten Prozessoreinheiten ausgetauscht werden, so geschieht dieses vorzugsweise in Abhängigkeit von den Betriebsinformationen. Dadurch wird beispielsweise sichergestellt, daß eine Prozessoreinheit bei einer auftretenden Überlastung Daten nicht sofort an eine ebenfalls überlastete, benachbarte Prozessoreinheit transferiert, sondern gegebenenfalls nach der Entlastung der benachbarten Prozessoreinheit.

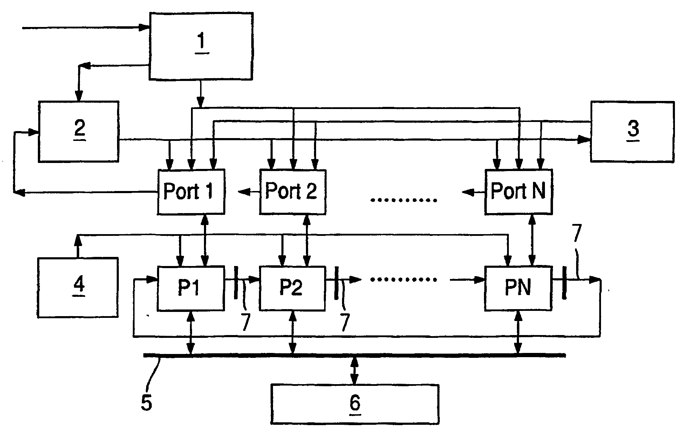

Die Erfindung wird nachfolgend anhand eines Ausführungsbeispiels unter Bezugnahme auf die Zeichnung erläutert. In dieser zeigt die einzige Figur ein schematisches Blockschaltbild des erfindungsgemäßen Ausführungsbeispiels.

In dem in der Figur dargestellten, erfindungsgemäßen Ausführungsbeispiel treffen eingehende Datenpakete auf eine Vorprozessoreinheit 1, welche in den Köpfen der Datenpakete abgelegte Verwaltungsinformationen liest. Die Verwaltungsinformationen der Datenpakete werden von der Vorprozessoreinheit 1 an eine Zuordnungseinheit 2 weitergeleitet. Die Datenpakete werden anhand ihrer Verwaltungsinformationen auf Eingangsspeicher Port i (i = 1,..., N) von zugehörigen, parallel angeordneten Prozessoreinheiten Pi (i = 1,..., N) verteilt. Die Eingangsspeicher Port i weisen die Adressen der Prozessoreinheiten Pi auf. Die einer Prozessoreinheit Pi zugewiesenen Datenpakete können in dem Eingangsspeicher Port i solange abgelegt werden, bis die Prozessoreinheit Pi zu ihrer Verarbeitung zur Verfügung steht. Jedoch dürfen einem Eingangsspeicher Port i keine Datenpakete mehr zugeführt werden, falls es dadurch zu einem Überlauf des Eingangsspeichers Port i käme. Zur Verarbeitung der Daten weisen die Prozessoreinheiten Pi jeweils einen Prozessor auf und zusätzlich jeweils einen lokalen Datenspeicher. In dem lokalen Datenspeicher einer Prozessoreinheit Pi werden beispielsweise während der Verarbeitung eines Datenpakets die Verwaltungsinformationen des Datenpakets und die nicht in der Verarbeitung befindlichen Teile des Datenpakets abgelegt. Ihre Programme zur Verarbeitung der Daten beziehen die Prozessoren von einem gemeinsam genutzten Programmspeicher 4.

Von den Prozessoreinheiten Pi werden Betriebsinformationen erzeugt, welche sowohl über die Auslastung des entsprechenden Prozessors und über den Füllstand des zugehörigen Eingangsspeichers Port i als auch über die in der betreffenden Prozessoreinheit Pi befindlichen Daten Auskunft geben. Die Betriebsinformationen werden über die Eingangsspeicher Port i an die Zuordnungseinheit 2 weitergeleitet. Von der Zuordnungseinheit 2 werden die Betriebsinformationen neben den Verwaltungsinformationen der Datenpakete als weiteres Kriterium herangezogen, um die Datenpakete auf die Prozessoreinheiten Pi zu verteilen. Diese Maßnahme hat den Vorteil, daß ausgelasteten Prozessoreinheiten Pi keine weiteren Datenpakete zur Verarbeitung zugeführt werden.

Alle Prozessoreinheiten Pi besitzen eine Verbindung zu einem gemeinsamen Datenbus 5. Über den Datenbus 5 haben die Prozessoreinheiten Pi Zugriff auf einen gemeinsam genutzten Speicherbereich 6. Darüberhinaus weisen die Prozessoren benachbarter Prozessoreinheiten Pi Zwischenverbindungen 7 zum Austausch von Daten auf. Über die Zwischenverbindungen 7 können an die Prozessoren benachbarter Prozessoreinheiten Pi ganze Datenpakete zur Verarbeitung weitergegeben werden oder auch nur Teile von Datenpaketen sowie beispielsweise auch die Betriebsinformationen der Prozessoreinheiten Pi. Es kann vorgesehen sein, daß eine Prozessoreinheit Pi bei einer auftretenden Überlastung schon empfangene oder eventuell schon in der Verarbeitung befindliche Datenpakete oder Teile davon zur Verarbeitung direkt an eine benachbarte Prozessoreinheit Pi transferiert. Hier kann auch vorgesehen sein, daß ein derartiger Datentransfer ohne Berücksichtigung der Betriebsinformationen erfolgt. Im Falle eines Datentransfers wird die Zuordnungseinheit 2 davon informiert, damit sie die neuen Betriebszustände der Prozessoreinheiten Pi in ihre Entscheidungen miteinbeziehen kann.

Da sich nach einem erfolgten Datentransfer zwischen zwei benachbarten Prozessoreinheiten Pi ein Datenpaket u.U. in beiden Prozessoreinheiten Pi befindet, ist es notwendig, die Ausgabezeitpunkte der Daten aus den Prozessoreinheiten Pi an den Datenbus 5 zu steuern. Nur so können die zu dem ursprünglichen Datenpaket gehörenden verarbeiteten Daten in der richtigen Reihenfolge wieder zusammengefügt werden. Die Aufgabe der Steuerung der Ausgabezeitpunkte ist einer Synchronisationseinheit 3 übertragen. Die Synchronisationseinheit 3 erhält von der Zuordnungseinheit 2 Auskunft über die Betriebszustände der Prozessoreinheiten Pi und die im Verarbeitungsprozeß befindlichen Datenpakete. Zur Steuerung der Ausgabezeitpunkte der Daten aus den Prozessoreinheiten Pi übermittelt die Synchronisationseinheit 3 Befehle in Form von Synchronisations-Datenzellen an die den Prozessoreinheiten Pi zugeordneten Eingangsspeicher Port i. Um die richtige Ausgabereihenfolge der Daten zu gewährleisten, werden die Synchronisations-Datenzellen von den Eingangsspeichern Port i und den Prozessoreinheiten Pi immer bevorzugt vor anderen Daten verarbeitet.

Des weiteren kann vorgesehen sein, daß die Synchronisationseinheit 3 die Ausgabereihenfolge von Datenpaketen, die zu einem Datenstrom gehören, steuert. Ein Datenstrom setzt sich aus Datenpaketen zusammen, die von einem speziellen Sender stammen und für einen speziellen Empfänger bestimmt sind. Bei einem solchen zwischen einem Sender und einem Empfänger fließenden Datenstrom ist es wichtig, daß die Reihenfolge der Datenpakete durch die erfindungsgemäße Einheit nicht oder nur unwesentlich verändert wird. Aus diesem Grund werden die Datenpakete eines Datenstroms von der Zuordnungseinheit 2 nur auf eine oder wenige Prozessoreinheiten Pi zur Verarbeitung verteilt. Die Synchronisationseinheit 3 steuert anschließend die Ausgabe der Datenpakete an den Datenbus 5, so daß die ursprüngliche Reihenfolge der Datenpakete gewahrt bleibt.

Obwohl es für manche Anwendungen sinnvoll sein kann, daß die verarbeiteten Daten eines Datenpakets nach der Ausgabe aus den Prozessoreinheiten Pi wieder in einem Datenpaket zusammengefaßt werden, ist es auch denkbar, daß Datenpakete nach oder während der Verarbeitung nach anderen Kriterien gebildet werden. So können beispielsweise schon während der Verarbeitung die Köpfe von Datenpaketen ausgetauscht werden, Datenpakete geteilt werden, mehrere Datenpakete zu einem Datenpaket zusammengefaßt werden oder neue Datenpakete erzeugt werden.

## Patentansprüche

1. Einheit zur Verteilung und Verarbeitung von Datenpaketen, welche aufweist:
- parallel geschaltete Prozessoreinheiten (Pi) zur Verarbeitung von Daten, wobei
- - jede Prozessoreinheit (Pi) einen Prozessor aufweist,
- - jeder Prozessor eine Verbindung zu einem gemeinsam genutzten Datenbus (5) aufweist, und
- mindestens eine Verwaltungseinheit, welche derart ausgelegt ist, daß sie in Abhängigkeit von in den Datenpaketen abgelegten Verwaltungsinformationen und/oder in Abhängigkeit von durch die Prozessoreinheiten (Pi) übermittelten Betriebsinformationen der Prozessoreinheiten (Pi) die Datenpakete auf die Prozessoreinheiten (Pi) verteilt,
**dadurch gekennzeichnet,**
- **daß** die Prozessoren benachbarter Prozessoreinheiten (Pi) zusätzliche Zwischenverbindungen (7) zum Austausch von Daten aufweisen.

2. Einheit nach Anspruch 1,
**dadurch gekennzeichnet,**
- **daß** jeder Prozessoreinheit (Pi) ein Eingangsspeicher (Port i) vorgeschaltet ist.

3. Einheit nach Anspruch 1 oder 2,
**dadurch gekennzeichnet,**
- **daß** die Betriebsinformationen einer Prozessoreinheit (Pi) Informationen über die Auslastung des zugehörigen Prozessors enthalten.

4. Einheit nach einem der vorhergehenden Ansprüche,
**dadurch gekennzeichnet,**
- **daß** die Betriebsinformationen einer Prozessoreinheit (Pi) Informationen über die in der betrachteten Prozessoreinheit (Pi) befindlichen Daten enthalten.

5. Einheit nach einem der vorhergehenden Ansprüche,
**dadurch gekennzeichnet,**
- **daß** die Betriebsinformationen einer Prozessoreinheit (Pi) Informationen über den Füllstand des vorgeschalteten Eingangsspeichers (Port i) enthalten.

6. Einheit nach einem der vorhergehenden Ansprüche,
**dadurch gekennzeichnet,**
- **daß** die mindestens eine Verwaltungseinheit eine Vorprozessoreinheit (1) zum Lesen der in den Datenpaketen abgelegten Verwaltungsinformationen, eine Zuordnungseinheit (2) zum Verteilen der Datenpakete auf die Prozessoreinheiten (Pi) in Abhängigkeit von den Verwaltungsinformationen und/oder den Betriebsinformationen und eine Synchronisationseinheit (3) zur Steuerung der Ausgabezeitpunkte der Daten aus den Prozessoreinheiten (Pi) anhand der von der Zuordnungseinheit (2) übermittelten Verwaltungs- und Betriebsinformationen umfaßt.

7. Einheit nach Anspruch 6, wenn von Anspruch 2 abhängig,
**dadurch gekennzeichnet,**
- **daß** die Synchronisationseinheit (3) derart ausgestaltet ist, daß von ihr übermittelte Befehle zur Steuerung der Ausgabezeitpunkte der Daten in Form von Synchronisations-Datenzellen an die Eingangsspeicher (Port i) der Prozessoreinheiten (Pi) gesendet werden.

8. Einheit nach Anspruch 7,
**dadurch gekennzeichnet,**
- **daß** die Eingangsspeicher (Port i) und die Prozessoreinheiten (Pi) ausgelegt sind, Synchronisations-Datenzellen bevorzugt vor anderen Daten zu verarbeiten.

9. Einheit nach einem der vorhergehenden Ansprüche,
**dadurch gekennzeichnet,**
- **daß** die Verwaltungseinheit ausgelegt ist, Datenpakete, die anhand ihrer Verwaltungsinformationen als zusammengehörig zu betrachten sind, einer bestimmten Prozessoreinheit (Pi) zuzuteilen oder auf einige wenige bestimmte Prozessoreinheiten (Pi) zu verteilen.

10. Einheit nach einem der vorhergehenden Ansprüche,
**dadurch gekennzeichnet,**
- **daß** die Prozessoreinheiten (Pi) zusätzlich jeweils einen lokalen Datenspeicher aufweisen.

11. Einheit nach einem der vorhergehenden Ansprüche,
**dadurch gekennzeichnet,**
- **daß** die Prozessoren Zugang zu mindestens einem von allen Prozessoren gemeinsam genutzten Programmspeicher (4) haben.

12. Einheit nach einem der vorhergehenden Ansprüche,
**dadurch gekennzeichnet,**
- **daß** die Prozessoren über den gemeinsam genutzten Datenbus (5) Zugang zu einem von allen Prozessoren gemeinsam genutzten Speicherbereich (6) haben.

13. Einheit nach einem der vorhergehenden Ansprüche,
**dadurch gekennzeichnet,**
- **daß** benachbarte Prozessoreinheiten (Pi) zum Austausch von Betriebsinformationen über die zusätzlichen Zwischenverbindungen (7) ausgelegt sind.

14. Einheit nach einem der vorhergehenden Ansprüche,
**dadurch gekennzeichnet,**
- **daß** der Austausch von Nutzdaten zwischen den Prozessoreinheiten (Pi) von den Betriebsinformationen abhängt.

15. Verfahren zur Verteilung von Datenpaketen auf parallel geschaltete Prozessoreinheiten (Pi), welche jeweils einen Prozessor aufweisen, und zur Verarbeitung der Datenpaketen durch die Prozessoren, welches folgende Schritte umfaßt:
(1) Lesen von in den Datenpaketen abgelegten Verwaltungsinformationen;
(2) Verteilen der Datenpakete auf die Prozessoreinheiten (Pi) in Abhängigkeit von den Verwaltungsinformationen der Datenpakete und/oder in Abhängigkeit von Betriebsinformationen der Prozessoreinheiten (Pi); und
(3) Verarbeitung der Daten durch die Prozessoren;
**dadurch gekennzeichnet,**
- **daß** Daten unter den Prozessoren benachbarter Prozessoreinheiten (Pi) in Abhängigkeit der Betriebsinformationen der betrachteten Prozessoreinheiten (Pi) ausgetauscht werden.

16. Verfahren nach Anspruch 15,
**dadurch gekennzeichnet,**
- **daß** die den Prozessoreinheiten (Pi) zugeführten Datenpakete zunächst in einem Eingangsspeicher (Port i) gespeichert werden und dann von einem Prozessor verarbeitet werden.

17. Verfahren nach einem der Ansprüche 15 bis 16,
**dadurch gekennzeichnet,**
- **daß** durch die Betriebsinformationen einer Prozessoreinheit (Pi) Informationen über die Auslastung des zugehörigen Prozessors übermittelt werden.

18. Verfahren nach einem der Ansprüche 15 bis 17,
**dadurch gekennzeichnet,**
- **daß** durch die Betriebsinformationen einer Prozessoreinheit (Pi) Informationen über die in der betrachteten Prozessoreinheit (Pi) befindlichen Daten übermittelt werden.

19. Verfahren nach einem der Ansprüche 15 bis 18,
**dadurch gekennzeichnet,**
- **daß** durch die Betriebsinformationen einer Prozessoreinheit (Pi) Informationen über den Füllstand des vorgeschalteten Eingangsspeichers (Port i) übermittelt werden.

20. Verfahren nach einem der Ansprüche 15 bis 19,
**dadurch gekennzeichnet,**
- **daß** eine Synchronisationseinheit (3) die Ausgabezeitpunkte der Daten aus den Prozessoreinheiten (Pi) in Abhängigkeit von den Verwaltungs- und Betriebsinformationen steuert.

21. Verfahren nach Anspruch 20,
**dadurch gekennzeichnet,**
- **daß** von der Synchronisationseinheit (3) übermittelte Befehle zur Steuerung der Ausgabezeitpunkte der Daten in Form von Synchronisations-Datenzellen an die Eingangsspeicher (Port i) der Prozessoreinheiten (Pi) gesendet werden.

22. Verfahren nach Anspruch 21,
**dadurch gekennzeichnet,**
- **daß** die Synchronisations-Datenzellen von den Eingangsspeichern (Port i) und den Prozessoreinheiten (Pi) bevorzugt vor anderen Daten verarbeitet werden.

23. Verfahren nach einem der Ansprüche 15 bis 22,
**dadurch gekennzeichnet,**
- **daß** Datenpakete, die anhand ihrer Verwaltungsinformationen als zusammengehörig zu betrachten sind, einer bestimmten Prozessoreinheit (Pi) zugeteilt oder auf einige wenige bestimmte Prozessoreinheiten (Pi) verteilt werden.

24. Verfahren nach einem der Ansprüche 15 bis 23,
**dadurch gekennzeichnet,**
- **daß** Teile eines Datenpakets während der Verarbeitung des betrachteten Datenpakets durch einen Prozessor in einem lokalen Datenspeicher der zugehörigen Prozessoreinheit (Pi) gespeichert werden.

25. Verfahren nach einem der Ansprüche 15 bis 24,
**dadurch gekennzeichnet,**
- **daß** die Prozessoren ihre Programme zur Datenverarbeitung von mindestens einem von allen Prozessoren gemeinsam genutzten Programmspeicher (4) beziehen.

26. Verfahren nach einem der Ansprüche 15 bis 25,
**dadurch gekennzeichnet,**
- **daß** die Prozessoren auf einen von allen Prozessoren gemeinsam genutzten Speicherbereich (6) zugreifen.

27. Verfahren nach einem der Ansprüche 15 bis 26,
**dadurch gekennzeichnet,**
- **daß** benachbarte Prozessoreinheiten (Pi) Betriebsinformationen austauschen.

## Claims

1. Unit for distributing and processing data packets, which has:
- parallel-connected processor units (Pi) for processing data, in particular data packets, with
- - each processor unit (Pi) having one processor,
- - each processor having a connection to a jointly used data bus (5), and
- at least one administration unit, which is designed in such a way that it distributes the data packets to the processor units (Pi) as a function of administration information which is stored in the data packets and/or as a function of operating information for the processor units (Pi), which is transmitted by the processor units (Pi),
**characterized**
- **in that** the processors of adjacent processor units (Pi) having additional intermediate connections (7) for interchanging data.

2. Unit according to Claim 1,
**characterized**
- **in that** each processor unit (Pi) has an upstream input memory (Port i).

3. Unit according to Claim 1 or 2,
**characterized**
- **in that** the operating information for a processor unit (Pi) contains information about the load level on the associated processor.

4. Unit according to one of the preceding claims,
**characterized**
- **in that** the operating information for a processor unit (Pi) contains information about the data which is located in the processor unit (Pi) under consideration.

5. Unit according to one of the preceding claims,
**characterized**
- **in that** the operating information for a processor unit (Pi) contains information about the filling level of the upstream input memory (Port i).

6. Unit according to one of the preceding claims,
**characterized**
- **in that** the at least one administration unit has an initial processor unit (1) for reading the administration information which is stored in the data packets, an allocation unit (2) for distributing the data packets to the processor units (Pi) as a function of the administration information and/or of the operating information, and a synchronization unit (3) for controlling the output times of the data from the processor units (Pi) on the basis of the administration and operating information which is transmitted from the allocation unit (2).

7. Unit according to Claim 6 if dependent on Claim 2,
**characterized**
- **in that** commands which are transmitted from the synchronization unit (3) for controlling the output times of the data are transmitted in the form of synchronization data cells to the input memories (Port i) of the processor units (Pi).

8. Unit according to Claim 7,
**characterized**
- **in that** the input memories (Port i) and the processor units (Pi) are designed to process synchronization data cells with priority over other data.

9. Unit according to one of the preceding claims,
**characterized**
- **in that** the administration unit is designed to allocate to a specific processor unit (Pi) data packets which can be considered to be associated on the basis of their administration information or to distribute them to a small number of specific processor units (Pi).

10. Unit according to one of the preceding claims,
**characterized**
- **in that** the processor units (Pi) also each have a local data memory.

11. Unit according to one of the preceding claims,
**characterized**
- **in that** the processors have access to at least one program memory (4) which is used jointly by all the processors.

12. Unit according to one of the preceding claims,
**characterized**
- **in that** the processors have access via the jointly used data bus (5) to a memory area (6) which is used jointly by all the processors.

13. Unit according to one of the preceding claims,
**characterized**
- **in that** adjacent processor units (Pi) are designed for interchanging operating information via the additional intermediate connections (7).

14. Unit according to one of the preceding claims,
**characterized**
- **in that** user data is interchanged between the processor units (Pi) as a function of the operating information.

15. Method for distributing data packets to parallel-connected processor units (Pi), which each have a processor, and for processing the data packets by the processors, which method comprises the following steps:
(1) reading of administration information which is stored in the data packets;
(2) distribution of the data packets to the processor units (Pi) as a function of the administration information for the data packets and/or as a function of operating information for the processor units (Pi); and
(3) processing of the data by the processors,
**characterized**
- **in that** data is interchanged between the processors of adjacent processor units (Pi) as a function of the operating information for the processor units (Pi) under consideration.

16. Method according to Claim 15,
**characterized**
- **in that** the data packets which are supplied to the processor units (Pi) are first of all stored in an input memory (Port i), and are then processed by a processor.

17. Method according to either of Claims 15 and 16,
**characterized**
- **in that** information about the load level on the associated processor is transmitted by means of the operating information for a processor unit (Pi).

18. Method according to one of Claims 15 to 17,
**characterized**
- **in that** information about the data which is located in the processor unit (Pi) under consideration is transmitted by means of the operating information for a processor unit (Pi).

19. Method according to one of Claims 15 to 18,
**characterized**
- **in that** information about the filling level of the upstream input memory (Port i) is transmitted by means of the operating information for a processor unit (Pi).

20. Method according to one of Claims 15 to 19,
**characterized**
- **in that** a synchronization unit (3) controls the output times of the data from the processor units (Pi) as a function of the administration and operating information.

21. Method according to Claim 20,
**characterized**
- **in that** commands which are transmitted from the synchronization unit (3) for controlling the output times of the data are transmitted in the form of synchronization data cells to the input memories (Port i) of the processor units (Pi).

22. Method according to Claim 21,
**characterized**
- **in that** the synchronization data cells are processed by the input memories (Port i) and by the processor units (Pi) with priority over other data.

23. Method according to one of Claims 15 to 22,
**characterized**
- **in that** data packets which can be considered to be associated on the basis of their administration information are allocated to a specific processor unit (Pi) or are distributed to a small number of specific processor units (Pi).

24. Method according to one of Claims 15 to 23,
**characterized**
- **in that** parts of a data packet are stored, during the processing of the data packet under consideration, by a processor in a local data memory of the associated processor unit (Pi).

25. Method according to one of Claims 15 to 24,
**characterized**
- **in that** the processors draw their programs for data processing from at least one program memory (4) which is used jointly by all the processors.

26. Method according to one of Claims 15 to 25,
**characterized**
- **in that** the processors access a memory area (6) which is used jointly by all the processors.

27. Method according to one of Claims 15 to 26,
**characterized**
- **in that** adjacent processor units (Pi) interchange operating information.

## Revendications

1. Unité de répartition et de traitement de paquets de données qui comporte :
- des unités (Pi) de processeur qui sont montées en parallèle pour le traitement des données,
- -chaque unité (Pi) de processeur ayant un processeur,
- -chaque processeur ayant une liaison avec un bus (5) de données utilisé en commun, et
- au moins une unité de gestion qui est conçue pour répartir, en fonction d'informations de gestion mises dans les paquets de données et/ou en fonction d'informations de fonctionnement des unités (Pi) de processeur transmises par les unités (Pi) de processeur, les paquets de données entre les unités (Pi) de processeur,
**caractérisée**
- **en ce que** les processeurs d'unités (Pi) de processeur voisines ont des liaisons (7) intermédiaires supplémentaires pour échanger des données.

2. Unité suivant la revendication 1,
**caractérisée**
- **en ce qu'**une mémoire (port i) d'entrée est montée en amont de chaque unité (Pi) de processeur.

3. Unité suivant la revendication 1 ou 2,
**caractérisée**
- **en ce que** les informations de fonctionnement d'une unité (Pi) de processeur contiennent des informations sur la charge du processeur associé.

4. Unité suivant l'une des revendications précédentes,
**caractérisée**
- **en ce que** les informations de fonctionnement d'une unité (Pi) de processeur contiennent des informations sur les données se trouvant dans l'unité (Pi) de processeur considérée.

5. Unité suivant l'une des revendications précédentes,
**caractérisée**
- **en ce que** les informations de fonctionnement d'une unité (Pi) de processeur contiennent des informations sur le niveau de remplissage de la mémoire (Port i) d'entrée montée en amont.

6. Unité suivant l'une des revendications précédentes,
**caractérisée**
- **en ce que** la au moins une unité de gestion comprend une unité (1) de préprocesseur pour lire les informations de gestion mises dans les paquets de données, une unité (2) d'affectation pour répartir les paquets de données entre les unités (Pi) de processeur en fonction des informations de gestion et/ou les informations de fonctionnement, et une unité (3) de synchronisation pour commander les instants d'émission de données à partir des unités (Pi) de processeur au moyen des informations de gestion et de fonctionnement transmises par l'unité (2) d'affectation.

7. Unité suivant la revendication 6 lorsqu'elle dépend de la revendication 2,
**caractérisée**
- **en ce que** l'unité (3) de synchronisation est telle que des instructions qu'elle contenait de commande des instants d'émission de données sont envoyées sous la forme de cellules de données de synchronisation à la mémoire (Port i) d'entrée des unités (Pi) de processeur.

8. Unité suivant la revendication 7,
**caractérisée**
- **en ce que** la mémoire (Port i) d'entrée et l'unité (Pi) de processeur sont conçues pour traiter des cellules de données de synchronisation de préférence à d'autres données.

9. Unité suivant l'une des revendications précédentes,
**caractérisée**
- **en ce que** l'unité de gestion est conçue pour affecter des paquets de données qui doivent être considérés au moyen de leurs informations de gestion comme faisant partie d'un ensemble à une unité (Pi) de processeur déterminée ou pour les répartir entre peu d'unités (Pi) de processeur déterminées.

10. Unité suivant l'une des revendications précédentes,
**caractérisée**
- **en ce que** les unités (Pi) de processeur ont, en outre, respectivement une mémoire locale de données.

11. Unité suivant l'une des revendications précédentes,
**caractérisée**
- **en ce que** les processeurs ont accès à au moins une mémoire (4) de programme utilisée en commun par tous les processeurs.

12. Unité suivant l'une des revendications précédentes,
**caractérisée**
- **en ce que** les processeurs ont, par le bus (5) de données utilisé en commun, accès à une partie (6) de la mémoire utilisée en commun par tous les processeurs.

13. Unité suivant l'une des revendications précédentes,
**caractérisée**
- **en ce que** des unités (Pi) voisines de processeur sont conçues pour échanger des informations de fonctionnement par les liaisons (7) intermédiaires supplémentaires.

14. Unité suivant l'une des revendications précédentes,
**caractérisée**
- **en ce que** l'échange de données utiles entre les unités (Pi) de processeur dépend des informations de fonctionnement.

15. Procédé de répartition de paquets de données entre des unités (Pi) de processeur montées en parallèle, qui ont respectivement un processeur, et de traitement de paquets de données par les processeurs qui comprend les stades suivants :
(1) lecture d'informations de gestion mises dans les paquets de données ;
(2) répartition des paquets de données entre les unités (Pi) de processeur en fonction des informations de gestion des paquets de données et/ou en fonction d'informations de fonctionnement des unités (Pi) de processeur ; et
(3) traitement des données par les processeurs ;
**caractérisé**
- **en ce que** des données sont échangées entre les processeurs d'unités (Pi) de processeur voisines en fonction des informations de fonctionnement des unités (Pi) de processeur considérées.

16. Procédé suivant la revendication 15,
**caractérisé**
- **en ce que** l'on mémorise les paquets de données envoyés aux unités (Pi) de processeur d'abord dans une mémoire (Port i) d'entrée et on les traite ensuite par un processeur.

17. Procédé suivant l'une des revendications 15 à 16,
**caractérisé**
- **en ce que** l'on transmet par les informations de fonctionnement à une unité (Pi) de processeur des informations sur la charge du processeur qui en fait partie.

18. Procédé suivant l'une des revendications 15 à 17,
**caractérisé**
- **en ce que** l'on transmet par les informations de fonctionnement à une unité (Pi) de processeur des informations sur les données se trouvant dans l'unité (Pi) de processeur considérée.

19. Procédé suivant l'une des revendications 15 à 18,
**caractérisé**
- **en ce que** l'on transmet par les informations de fonctionnement à une unité (Pi) de processeur des informations sur les niveaux de remplissage de la mémoire (Port i) d'entrée montée en amont.

20. Procédé suivant l'une des revendications 15 à 19,
**caractérisé**
- **en ce qu'**une unité (3) de synchronisation commande les instants d'émission des données par les unités (Pi) de processeur en fonction des informations de gestion et de fonctionnement.

21. Procédé suivant la revendication 20,
**caractérisé**
- **en ce que** des instructions transmises par l'unité (3) de synchronisation de réglage des instants d'émission des données sont envoyées sous la forme de cellules de données de synchronisation aux mémoires (Port i) d'entrée des unités (Pi) de processeur.

22. Procédé suivant la revendication 21,
**caractérisé**
- **en ce que** les cellules de données de synchronisation sont traitées par les mémoires (Port i) d'entrée et par les unités (Pi) de processeur de préférence avant d'autres données.

23. Procédé suivant l'une des revendications 15 à 22,
**caractérisé**
- **en ce que** des paquets de données qui doivent être considérés au moyen de leurs informations de gestion comme faisant partie d'un ensemble sont attribués à une unité (Pi) de processeur déterminée ou sont répartis sur peu d'unités (Pi) de processeur déterminées.

24. Procédé suivant l'une des revendications 15 à 23,
**caractérisé**
- **en ce que** des parties d'un paquet de données sont mémorisées pendant le traitement du paquet de données considéré par un processeur dans une mémoire locale de données de l'unité (Pi) de processeur associée.

25. Procédé suivant l'une des revendications 15 à 24,
**caractérisé**
- **en ce que** les processeurs se procurent leur programme de traitement de données à partir d'au moins une mémoire (4) de programme utilisée en commun par tous les processeurs.

26. Procédé suivant l'une des revendications 15 à 25,
**caractérisé**
- **en ce que** les processeurs ont accès à une partie (6) de la mémoire utilisée en commun par tous les processeurs.

27. Procédé suivant l'une des revendications 15 à 26,
**caractérisé**
- **en ce que** des unités (Pi) voisines de processeur échangent des informations de fonctionnement.
